# EUROPEAN PATENT SPECIFICATION

(11) **EP 0 283 001 B1**
(45) Date of publication and mention of the grant of the patent: **09.06.1993**
(21) Application number: 88104195.8
(22) Date of filing: 16.03.1988
(51) Int. Cl.: B23P 15/00, B29C 45/20

(54) **Injection molding nozzle and method**
Einspritzdüse und Herstellungsverfahren
Buse d'injection et méthode de fabrication

(30) Priority: 20.03.1987 CA 532677
(43) Date of publication of application: 21.09.1988
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- EP-A- 0 069 997
- EP-A- 0 167 977
- FR-A- 2 497 477

## Description

### BACKGROUND OF THE INVENTION

This invention relates to a method of making an integral injection molding heated nozzle according to the preamble of claim 1.

Such a method is known from EP-A-167 977.

Casting helical heating elements in copper in an injection molding nozzle is well known in the art. For instance, the applicant's U.S. patent no. 4,238,671 entitled "Sprue Bushing with Cast in Heater Element" which issued December 9, 1980 shows a helical heating element cast around a high strength corrosion resistant inner core portion through which the melt passage extends. An improvement in this early method is shown in the applicant's U.S. patent nos. 4,355,460 entitled "Sprue Bushing and Method of Manufacture" which issued October 26, 1982 and 4,386,262 (divisional) entitled "Sprue Bushing with Cast in Electrical Heating Element" which issued May 31, 1983. In these patents, the helical heating element is cast in a copper portion between the inner core portion and an outer sleeve. Further improvements are shown in the applicant's U.S. patent nos. 4,403,405 entitled "Sprue Bushing Connector Assembly Method" which issued September 13, 1983 and 4,446,360 (divisional) entitled "Sprue Bushing Connector Assembly" which issued May 1, 1984 which specifically relate to sealing around the heating element cold terminal using a split washer arrangement. While the nozzles disclosed in all of the above patents have the advantage that the heating element is cast in copper which rapidly disperses the heat, they have been found to have several disadvantages for certain applications. Firstly, with the increasing demand for high temperature and high pressure applications, it is not possible to provide the required bursting strength without increasing the outside diameter of the nozzles, which is not acceptable for some cavity configurations. Bursting strength minimum requirements of 3445 bar (50,000 psi.) are now quite common and this is difficult because the copper portion around the heating element is relatively weak and does not add much strength. Secondly, it is desirable that the coils of the heating element be accurately located in the nozzle. Furthermore, because there is usually more heat loss at the ends of the nozzle than in the middle, it is desirable that the pitch of the heating element vary along the length of the nozzle according to a predetermined pattern, depending upon the application. This has not been found to be possible with these previous nozzles where the central core is inserted into the helical heating element which is then cast in copper.

More recently, in order to overcome some of these and other problems, the applicant has provided a nozzle with a heating element brazed in a spiral channel in the outer surface of the nozzle body. This is shown in the applicant's U.S. patent nos. 4,557,685 entitled "Heated Nozzle for Injection Molding Apparatus" which issued December 10, 1985 (corresponds to EP-A-0 167 977) and 4,583,284 (divisional) entitled "Method of Manufacture of Injection Molding Heated Nozzle with Brazed in Heating Element" which issued April 22, 1986. However, unfortunately this has been found not to be entirely satisfactory because the nickel brazing compound does not flow evenly throughout the spiral channel and thus the contact between the heating element and the body is not uniform throughout its length.

Finally, another sprue bushing and method of manufacturing same is shown in the applicant's EP-A 0 069 997. In this case the heating element is completely embedded in a beryllium copper portion which requires comsiderable space between an inner portion defining the melt bore and an outer sleeve, implying the disadvantage that the overall diameter of the nozzle is considerably increased. Also with respect to relatively large heat dissipation from said beryllium copper portion such a sprue bushing is not entirely satisfactory.

### SUMMARY OF THE INVENTION

Accordingly, it is an object of the present invention to at least partially overcome the disadvantages of the prior art by providing an improved injection molding nozzle and method wherein an electrical heating element is vacuum cast in a spiral groove with a predetermined profile to completely cover the heating element with a minimum depth of copper.

To this end, the invention provides a method of making an integral injection molding heated nozzle comprising the steps of forming an elongated steel body having a central melt bore and a spiral channel for accommodating a heating element therein, said spiral channel extending along an outer cylindrical surface of the steel body, winding an electrically insultated heating element in the channel with one end fixed therein adjacent the forward end of the steel body and cold terminal of the heating element at the opposite end extending from the spiral channel adjacent the rear end of the steel body, applying a copper brazing material and vacuum casting the assembly to completely cover the heating element in the spiral channel and to form an integral bond between the heating element and the steel body, finally machining the integral nozzle to provide the desired shape and finish thereof, the further steps of locating a steel head plate on the head of the body, the head plate having a central opening therethrough which receives the head of the steel body in a position to cover the portion of the spiral channel extending around the head, the head plate having a hole extending radially therethrough from the central opening to receive the end of the heating element having the cold terminal, whereby the head plate can be slightly rotated on the head of the body to provide a predetermined length of the heating element projecting therefrom to compensate for slight variations in winding the heating element in the spiral channel, inserting a forward end of the steel body into a steel sleeve to a position wherein the sleeve covers the spiral channel between the head and the forward end of the steel body, the sleeve having an inner diameter only slightly larger than the outer diameter of the outer surface of the body, whereby the copper brazing material flows along the heating element to fill the spiral channel beneath the sleeve and the head plate to completely cover the heating element in the spiral channel to a minimum depth, sealing the joints around the sleeve and the head plate and sealing around the cold terminal to prevent substantial leakage, and
securing a filler reservoir in communication with the spiral channel and inserting a predetermined quantity of copper in the filler reservoir are performed, wherein the final machining of the integral nozzle includes the removal of the filler reservoir.

Further objects and advantages of the invention will appear from the following description, taken together with the accompanying drawings.

### BRIEF DESCRIPTION OF THE DRAWINGS

Figure 1 is a sectional view showing a portion of a multi-gate injection molding system with nozzles made according to a first embodiment of the invention;
Figure 2 is an exploded isometric view showing some of the steps in making the nozzle seen in Figure 1;
Figure 3 is a sectional view showing the filler tube located on the body of the nozzle;
Figure 4 shows a batch of assembled units ready to be inserted into a vacuum furnace; and
Figure 5 is a sectional view similar to Figure 1 showing a nozzle made according to another embodiment of the invention.

### DETAILED DESCRIPTION OF THE DRAWINGS

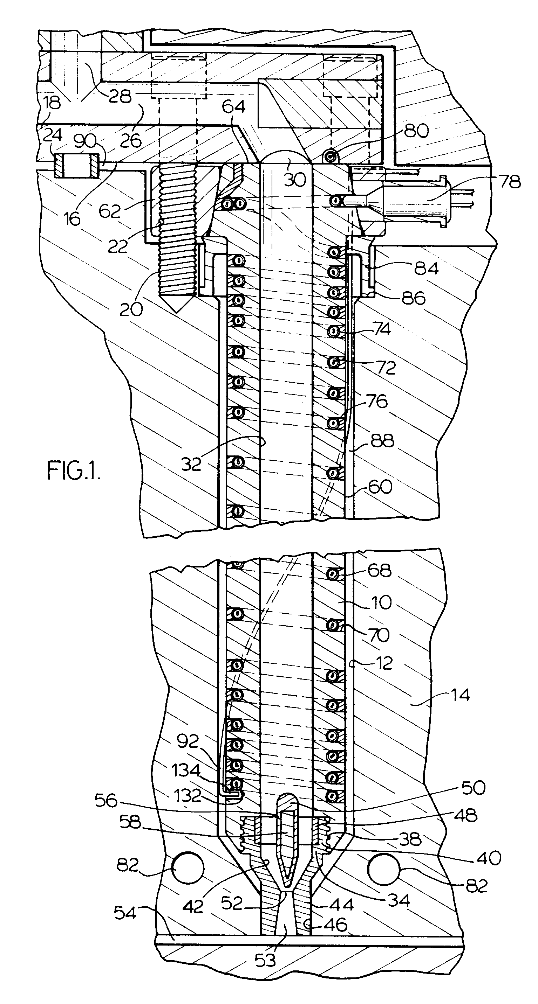

Reference is first made to Figure 1 which shows a portion of a multi-gate hot tip gated injection molding system having a number of nozzles 10, each of which are seated in a well 12 in a cavity plate 14. Each nozzle 10 is held tightly against the underside 16 of an elongated manifold 18 by bolts 20 which extend through holes 22 in the nozzle 10 into the cavity plate 14. The manifold 18 is located relative to the cavity plate 14 by a locating ring 24 seated centrally between them, and has a melt bore 26 which branches longitudinally from a central inlet 28. The melt bore 26 in the manifold 18 leads to an outlet 30 on the underside 16 which is in alignment with a central bore 32 through the nozzle 10. In this embodiment, the central bore 32 has an enlarged mouth 34 at its forward end 36 with threads 38 to removably receive tip insert 40. The tip insert 40 has a tapered central bore 42 in alignment with the central bore 32 and a cylindrical nose portion 44 which is received in an opening 46 through the core 14 and locates the forward end 36 of the nozzle. As can be seen, the tip insert 40 holds a torpedo assembly 48 firmly in place with an elongated torpedo 50 extending in the bore 42 which forms a gate 52 on a sprue 53 leading to the cavity 54. As described in the applicant's U.S. patent no. 4,450,990 entitled "Improved Injection Molding Hot Tip Seal" which issued May 29, 1984, the torpedo has an outer portion 56 made of high speed steel to be abrasion and corrosion resistant and an inner portion 58 made of copper which is highly conductive to improve the flow of heat to the area of the gate 52.

The nozzle has a generally cylindrical outer surface 60 and an enlarged head plate 62 at the rear end 64 through which the bolt holes 22 extend. The nozzle is heated by an elecrical heating element 66 which is cast in copper 68 in a spiral channel 70 in the outer surface 60. As described in the applicant's U.S. patent no. 4,557,685 referred to above, in this embodiment, the heating element 66 is double wire with a chromalloy resistance wire 72 extending through a refractory powder electrical insulating material 74 such as compacted magnesium oxide powder inside a steel casing 76. The heating element 66 has an enlarged cold terminal 78 which projects outwardly from the head plate 62 for connection to a suitable controlled power source. The manifold 18 is heated by an electrical heating element 80 which is cast into it as described in the applicant's Canadian patent no. 1,174,020 entitled "Injection Molding Manifold Member and Method of Manufacture" which issued September 11, 1984. The mold cavity plate 14 is cooled by cooling water pumped through cooling conduits 82 in a conventional manner. As is well known, in order to reduce heat loss to the cooled cavity plate 14, the nozzle 10 is located by an insulation bushing 84 seated on a shoulder 86 to provide an insulative air space 88 between them. Similarly, the locating ring 24 provides an insulative air space 90 between the hot manifold 18 and the cooled cavity plate 14. As described in more detail below, a thermocouple 92 is mounted to extend through the air space 88 to measure the temperature adjacent the heating element 66.

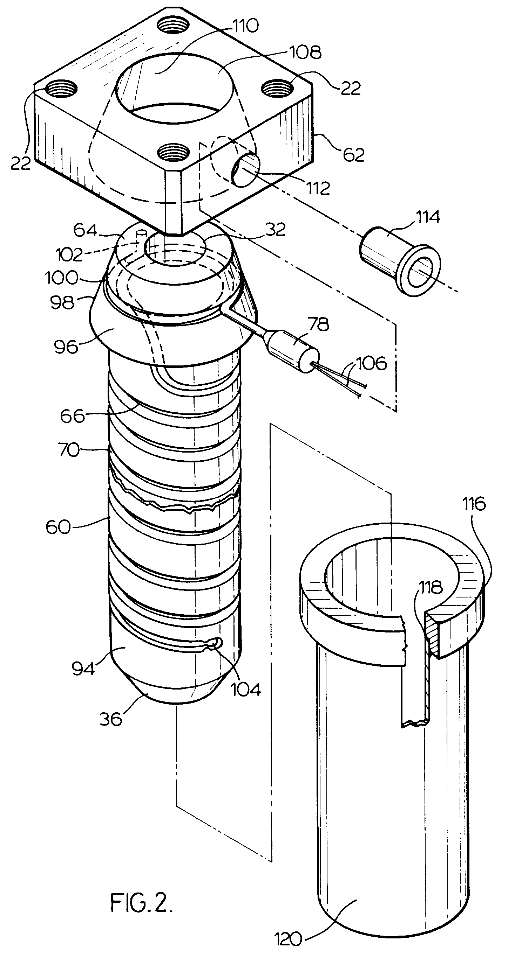

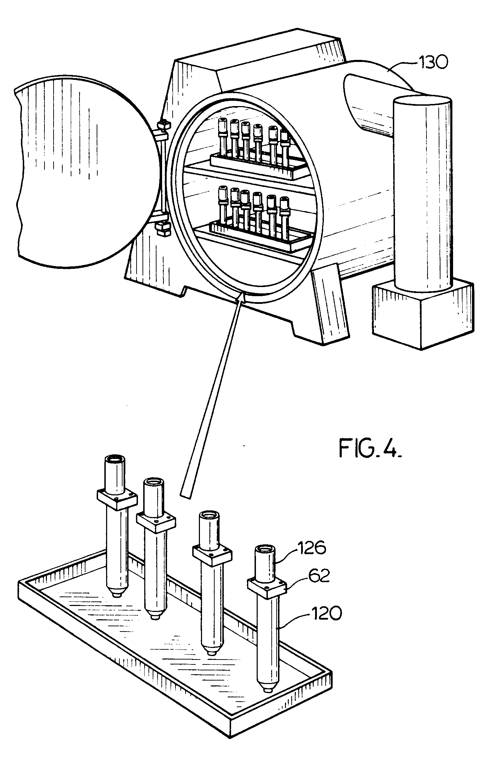

The steps involved in making the nozzles according to the first embodiment of the invention will now be described with particular reference to Figures 2, 3 and 4. An elongated body 94 is machined of a tool steel such as H13 to have a generally cylindrical outer surface 60 with an enlarged head 96 adjacent the rear end 64. The head 96 has a tapered outer surface 98 and a spiral channel 70 is machined in the outer surface 60. As can be seen, this channel 70 extends to the head 96 where it is cut deeper to have a uniform inner diameter throughout, and the upper groove 100 adjacent the rear end 64 extends circularly rather than diagonally around the head 96. A central bore 32 is drilled through the body 94 to provide the melt passage, and it will be appreciated that for large volume applications it is desirable that the diameter of the central bore 32 be as large as possible relative to the outer diameter of the nozzle. A small filler duct 102 is drilled to extend between the rear end 64 and the upper groove 100 of the spiral channel 70. As described above, the central bore 32 is enlarged adjacent the forward end 36 to form a mouth 34 which is threaded to receive the tip insert 40 with the torpedo assembly 48.

The electrical heating element 66 is wound in the spiral channel 70 beginning with one end 104 which is fixed in the channel 68 adjacent the forward end 36 of the body 94. While the end 104 can be fixed in place by spot welding, it is more conveniently done by burring the edges of the channel using a special punch. The other end of the heating element 66 projects from the channel 68 adjacent the rear end 64 with an enlarged cold terminal 78 from which terminal wires 106 extend. In this embodiment, two windings of the heating element 66 are wound in the last groove 100 to provide additional heating to the enlarged head 96.

A head plate 62 is machined of a tool steel such as H13 with a central opening 108 with a tapered inner surface 110 which matches the tapered outer surface 98 of the head 96. A hole 112 is drilled radially outward from the central opening 108 which is large enough to receive the cold terminal 78 of the heating element 66. Bolt holes 22 are also drilled in the head plate 62 to receive the bolts 20 to attach the nozzle 10 to the manifold 18, as described above. The cold terminal 78 is inserted through the radial hole 112 from the inside as the head plate 62 is placed on the head 96 of the body 94. The tapered inner surface 110 of the central opening 108 abuts against the matching tapered outer surface 98 of the head 96 to accurately locate the head plate 62 in this position where it covers the portion of the heating element 66 in the upper groove 100. When the heating element 66 is wound in the spiral channel 70, it is done carefully to ensure the element is completely within the channel throughout its length. However, no matter how carefully this is done, it is not possible to wind exactly the same length of heating element in the channel repeatedly. For any particular sized nozzle, the heating elements are made the same length and it will be appreciated that it is important that an equal length of the heating element be wound in the channel for each nozzle to provide consistent heating characteristics. This is achieved with the present method by tightening the heating element 66 in the spiral channel 70 and rotating the head plate 62 clockwise on the head 96 of the body 94 until a predetermined length of the heating element with the cold terminal 78 extends from the hole 112. A cold terminal sleeve 114 is then inserted over the projecting cold terminal 74 with one end seated around the hole 112 in the head plate 62.

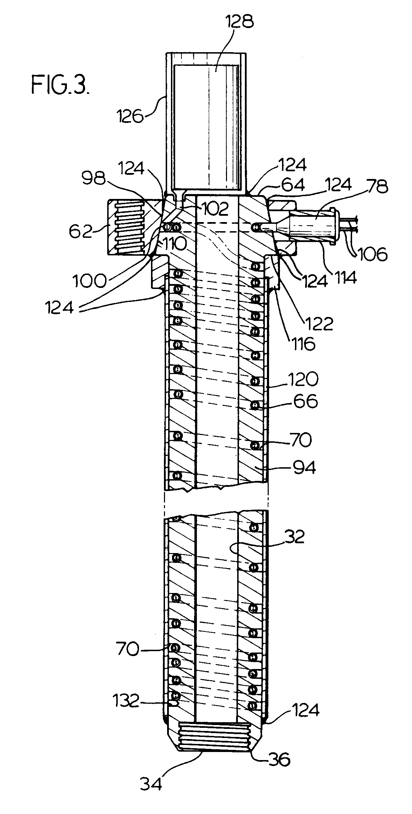

A stainless steel collar 116 is laser welded to one end 118 of a cylindrical stainless steel sleeve 120. The forward end 36 of the body 94 is then inserted into them until the collar abuts against the underside 122 of the head 96 and head plate 62 in a position where it covers the joint 122 between the tapered surfaces 98 and 110. The sleeve 120 has an inside diameter which is only slightly larger than the outside diameter of the cylindrical outer surface 60 of the body 94. Thus, the sleeve 120 covers the spiral channel 70 between the heat 96 and the forward end 36. As can be seen in Figure 3, the head plate 62, cold terminal sleeve 114, collar 116 and sleeve 120 are all laser welded where indicated by reference numeral 124 to hold them in place and to seal the joints between them and the body 94 to prevent leakage of copper.

An open ended filler reservoir 126 is welded on the rear end 64 of the body 94 to seal against leakage from an outlet leading to the filler duct 102. A slug 128 of a predetermined quantity of copper is inserted into the filler reservoir 126 and the assembly is inserted in this upright position into a vacuum furnace 130. In this embodiment, as the furnace is gradually heated to a temperature of approximately 1027°C (2050°F), the furnace is evacuated to a relatively high vacuum to remove substantially all of the oxygen. However, before the melting temperature of copper is reached, the vacuum is reduced by partially backfilling with an inert gas such as argon or nitrogen to avoid vapourization of the copper. When the slug 128 of copper melts in the partial vacuum, it runs through the filler duct 102 to the spiral channel 70 and along the spiral channel to completely fill it with copper around the heating element. As will be appreciated, the channel 70 is filled with copper out to the surrounding sleeve 120 which provides a minimum depth of copper over the heating element 66 which is sufficient to uniformly dissipate heat from the heating element along its length. While providing a sufficient coverage of copper, this method also maximizes the thickness of steel of the body 94 left between the central bore 32 and the spiral channel to retain sufficient bursting strength. Thus, for any particular bursting strength requirement, the diameter of the central bore 32 can be quite large relative to the outside diameter of the nozzle. Casting the copper in a partial vacuum provides a metallurgical bonding of the copper to the casing 76 of the heating element 66 and to the body 94 of the nozzle. Thus an integral structure is provided which efficiently transfers heat from the heating element and distributes it more uniformly along the central bore 32. As can be seen, the pitch or profile of the heating element 66 varies along its length to provide more heat at the ends of the nozzle than in the middle where there is less heat loss. This profile is precisely controlled for any particular application by varying the pattern of the spiral channel 70 which is cut in the outer surface 60 of the body 94.

After the nozzles are cooled and removed from the vacuum furnace, the nozzles are machined to remove the filler tube 126 and to provide the desired shape and finish. In this embodiment, the sleeve 120 and part of the collar 116 are also machined off to reduce the outside diameter of the nozzle. If outside diameter is not a factor, then the sleeve 120 may not be removed. As described above, prior to use, a tip insert 40 is screwed into the mouth 34 to mount the torpedo assembly 48 in place.

As shown in figures 1 and 3 when the body 94 is made, a well 132 is drilled in the outer surface 60 in communication with the spiral channel 70 adjacent the forward end 36. When the copper is cast in the vacuum furnace 130, it runs through the spiral channel 70 and also fills this well 132. After the sleeve 120 is machined off, a hole 134 is drilled in this copper to receive the thermocouple 92 to measure the temperature adjacent the heating element 66.

In use, after the system has been assembled as described above electrical power is applied to the heating elements 66 and 80 to heat the manifold 18 and the nozzles 10 to a predetermined operating temperature. Pressurized melt from a molding machine (not shown) is then introduced according to a predetermined cycle into the central inlet 28 of the melt bore 26 of the manifold 18, from where it flows through the melt bore 26 of each nozzle 10 to fill the cavities 54. After the cavities 54 are full, injection pressure is held momentarily to pack and then released. After a short cooling period, the mold is opened to eject the product. After ejection, the mold is closed the injection pressure is reapplied to refill the cavity. This cycle is repeated in a continuous cycle with a frequency dependent on the size and shape of the cavity and the type of material being molded.

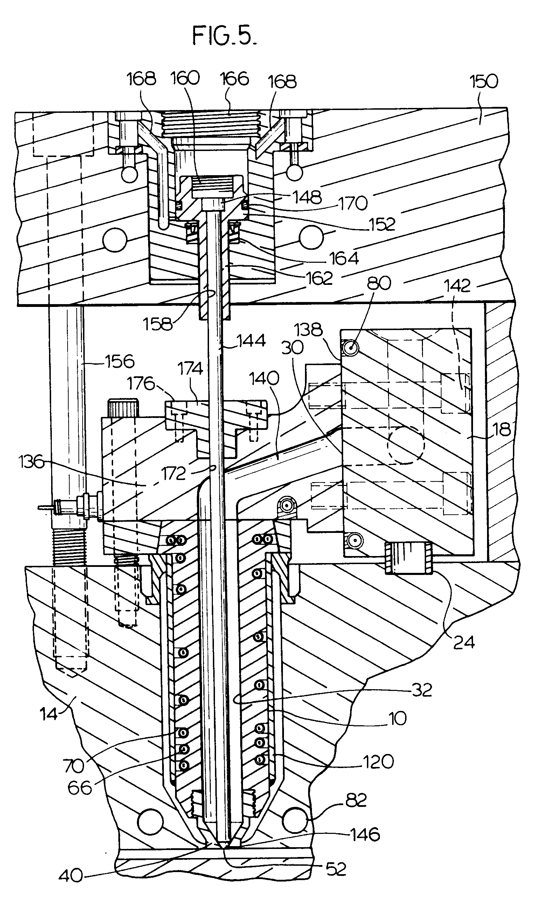

Reference is now made to Figure 5 which shows a nozzle according to another embodiment of the invention in a valve-gated system. As many of the elements are identical to those of the first embodiment described above, elements common to both embodiments are described and illustrated using the same reference numerals. In this system, each nozzle 10 is mounted on a manifold offset block 136 which is bolted with a desired orientation to the side 138 of the manifold 18. Each offset block 136 has a melt duct 140 which connects the outlet 30 from the manifold to the central bore 32 of the nozzle 10. While bolts 142 hold the manifold block 136 tightly enough against the side 138 of the manifold to prevent leakage of the pressurized melt, they do allow slight lateral movement therebetween to accomodate thermal expansion and contraction of the manifold to avoid leakage due to misalignment of the nozzle.

Each nozzle 10 has an elongated valve pin 144 extending centrally through the central melt bore 26. The valve pin has a tapered tip end 146 and an enlarged driven end 148 which is engaged by hydraulic actuating mechanism seated in the mold back plate 150. As described in the applicant's U.S. patent number 4,468,191 which issued August 28, 1984, the actuating mechanism includes a piston 152 which reciprocates in a cylinder 154 seated in the mold back plate 150. The cylinder is fixed in the mold back plate 150 by bolts (not shown) and the mold back plate is held securely by bolts 156 which extend into the cavity plate 14. The valve pin 144 extends through a hole 158 in the piston 152 and is secured to it by a threaded plug 160 which screws into the piston 152 and also seals against leakage of the hydraulic fluid. The piston has an elongated neck portion 162 and a V-shaped high temperature seal 164 is seated in the cylinder 154 to prevent leakage of pressurized hydraulic fluid around it. The cylinder 154 has a threaded cap 166 which is larger in diameter than the piston 152 so that the piston 152 and valve pin 144 can be removed if necessary. Pressurized hydraulic fluid is supplied to the cylinder 154 on opposite sides of the piston 152 through ducts 168 from a controlled source (not shown) to reciprocate the piston according to a predetermined cycle. In the forward closed position the valve pin tip end 146 is sealed in the gate 52, while in the retracted open position the piston abuts against the cap 166. An O-ring 170 is also provided to prevent leakage of the pressurized hydraulic fluid around the piston. The valve pin 144 extends through a valve pin bore 172 in the offset block 136 and through a sealing bushing 174 which is secured to the offset block 136 by screws 176. The offset block 136 and the bushing 174 are also made of H13 steel and the bores through them are nitrited to reduce wear by the reciprocating valve pin 144.

The nozzle 10 is the same as that described above except that the sleeve 120 has not been machined off because reducing outside diameter is not necessary for this application. As may be seen, a portion of the collar 116 has been machined off to accommodate the insulation bushing 118. Also, the configuration of the tip insert 40 is different to provide the valve gate 52. Otherwise the structure and method of casting the heating element 66 in the spiral channel 70 is the same as that described above and need not be repeated. Each nozzle 10 is held tightly against the offset block 136 by the bolts 20 which extend through the holes 22 in the head plate 62 into the cavity plate 14.

While the description of the nozzle and method of making it have been given with respect to preferred embodiments, it is not to be construed in a limiting sense. For example, it will be appreciated that nozzles according to the invention can be used with a variety of different systems. Thus tip inserts may be used having various configurations, or the forward end of the nozzles can be machined to provide other gate arrangements without using tip inserts. Other suitable methods of sealing such as nickel brazing and welding may be used rather than laser welding. Reference is made to the appended claims for a definition of the invention.

## Claims

1. A method of making an integral injection molding heated nozzle (10) comprising the steps of forming an elongated steel body (94) having a central melt bore (32) and a spiral channel (70) for accommodating a heating element (66) therein, said spiral channel (70) extending along an outer cylindrical surface (60) of the steel body (94), winding an electrically insulated heating element in the channel (70) with one end fixed therein adjacent the forward end of the steel body (94) and a cold terminal of the heating element (66) at the opposite end extending from the spiral channel (70) adjacent the rear end of the steel body (94), applying a copper brazing material and vacuum casting the assembly to completely cover the heating element (66) in the spiral channel (70) and to form an integral bond between the heating element (66) and the steel body (94), finally machining the integral nozzle to provide the desired shape and finish thereof,
**characterized by,**
the further steps of locating a steel head plate (62) on the head (96) of the body (94), the head plate (62) having a central opening (108) therethrough which receives the head (96) of the steel body (94) in a position to cover the portion of the spiral channel (70) extending around the head (96), the head plate (62) having a hole (112) extending radially therethrough from the central opening (108) to receive the end of the heating element (66) having the cold terminal (78), whereby the head plate (62) can be slightly rotated on the head (96) of the body (94) to provide a predetermined length of the heating element (66) projecting therefrom to compensate for slight variations in winding the heating element (66) in the spiral channel (70),
inserting a forward end (36) of the steel body (94) into a steel sleeve (120) to a position wherein the sleeve (120) covers the spiral channel (70) between the head (96) and the forward end (36) of the steel body (94), the sleeve (120) having an inner diameter only slightly larger than the outer diameter of the outer surface (60) of the body (94), whereby the copper brazing material flows along the heating element to fill the spiral channel (70) beneath the sleeve (120) and the head plate (62) to completely cover the heating element (66) in the spiral channel (70) to a minimum depth,
sealing the joints around the sleeve (120) and the head plate (62) and sealing around the cold terminal (78) to prevent substantial leakage, and
securing a filler reservoir (126) in communication with the spiral channel (70) and inserting a predetermined quantity of copper in the filler reservoir (126) are performed, wherein the final machining of the integral nozzle (10) includes the removal of the filler reservoir (126).

2. A method as claimed in claim 1, wherein in the head (96) of the body (94) is enlarged and has a tapered outer surface (98), and the central opening (108) through the head plate (62) has a matching tapered inner surface (110) to be received thereon.

3. A method as claimed in claims 1 or 2, wherein a steel collar (116) is fixed to one end of the sleeve (120) whereby when the sleeve (120) and head plate (62) are located in position, the collar (116) abuts against the underside of the head (96) and the head plate (62) in a position covering the joint between the tapered outer surface (98) of the head (96) and the matching tapered inner surface (110) of the head plate (62).

4. A method as claimed in at least one of the preceding claims 1 to 3, wherein a cold terminal sleeve (114) is fixed to the head plate (62) and sealed around the projecting cold terminal (78) of the heating element (66).

5. A method as claimed in at least one of the preceding claims 1 to 4, wherein the final machining of the integral nozzle (10) includes machining off the steel sleeve (120) to reduce the outside diameter of the nozzle (10).

6. A method as claimed in at least one of the preceding claims 1 to 5, wherein a filler duct (102) is drilled in the body (95) between the rear end (64) and the spiral channel (70) and the filler reservoir (126) is located on the rear end (64) over the filler duct (102), whereby when the copper is heated above its melting point in the vacuum furnace it runs down through the filler duct (102) to fill the spiral channel (70) around the heating element (66).

7. A method as claimed in at least one of the preceding claims 2 to 6, wherein the sealing of the assembled components of the nozzle prior to the vacuum brazing step is carried out by laser welding.

8. A method as claimed in at least one of the preceding claims 2 to 6, wherein the sealing of the assembled components of the nozzle prior to the vacuum brazing step is carried out by brazing.

9. A method as claimed in at least one of the preceding claims 1 to 8 further comprising drilling bolt holes (22) in the head plate (62) to mount the nozzle (10) in position in an injection molding system.

10. A method as claimed in at least one of the preceding claims 1 to 9, comprising the steps of drilling a well (132) in the outer surface (60) of the body (94) in communication with the spiral channel (70) whereby when the copper is cast in the well (132) is filled with copper, and drilling a hole (134) in the solidified copper to receive a thermocouple (92) to measure the temperature adjacent the heating element (66).

11. A method as claimed in at least one of the preceding claims 1 to 3, wherein a central mouth (34) is drilled in the forward end (36) of the body (94) to removably receive a steel insert (40) having a predetermined configuration.

12. A method as claimed in claim 11, wherein the steel tip insert (40) comprises a torpedo assembly (48) with a torpedo (50) centrally mounted in a central bore (42) in alignment with the central bore (32) through the body (94), the tip insert (40) having a nose portion (44) which extends to engage the core (14) of a mold during use to locate the forward end (36) of the nozzle (10).

## Patentansprüche

1. Verfahren zur Herstellung einer integralen, beheizten Spritzgießdüse (10) mit den Schritten der Ausbildung eines langgestreckten Stahlkörpers (94), der eine zentrale Schmelzebohrung (32) und einen Spiralkanal (70) aufweist, um in diesem ein Heizelement (66) aufzunehmen, wobei der Spiralkanal (70) sich entlang einer äußeren zylindrischen Oberfläche (60) des Stahlkörpers (94) erstreckt, des Einwickelns eines elektrisch isolierten Heizelementes in den Kanal (70), mit einem Ende in diesem befestigt benachbart zum vorderen Ende des Stahlkörpers (94) und einem Kaltanschluß des Heizelementes (66) am gegenüberlienden Ende, der sich von dem Sprialkanal (70) benachbart zum hinteren Ende des Stahlkörpers (94) aus erstreckt, des Auftragens eines Kupfer-Hartlotmateriales und des Vakuumgießens der Anordnung, um das Heizelement (66) in dem Spiralkanal (70) vollständig zu bedecken und eine integrale Bindung zwischen dem Heizelement (66) und dem Stahlkörper (94) auszubilden, und des abschließenden Bearbeitens der integralen Düse, um die gewünschte Form und Oberflächenendbearbeitung derselben herzustellen,
**gekennzeichnet durch**
die weiteren Schritte des Anordnens einer Stahl-Kopfplatte (62) auf dem Kopf (96) des Körpers (94), wobei die Kopfplatte (62) eine durchgehende Mittelöffnung (108) aufweist, die den Kopf (96) des Stahlkörpers (94) in einer Position aufnimmt, so daß der Teil des Spiralkanales (70) bedeckt ist, der sich rund um den Kopf (96) erstreckt, wobei die Kopfplatte (62) eine Bohrung (112) aufweist, die sich radial durch diese hindurch von der Mittelöffnung (108) aus erstreckt, um das Ende des Heizelementes (66), das den Kaltanschluß (78) besitzt, aufzunehmen, wodurch die Kopfplatte (62) auf dem Kopf (96) des Körpers (94) leicht gedreht werden kann, um eine vorgegebene Länge des Heizelementes (66) zu schaffen, das von dieser vorsteht und um leichte Schwankungen im Einwickeln des Heizelementes (66) in dem Spiralkanal (70) auszugleichen,
des Einsetzens eines vorderen Endes (36) des Stahlkörpers (94) in eine Stahlhülse in eine Position, in der die Hülse (120) den Spiralkanal (70) zwischen dem Kopf (96) und dem vorderen Ende (36) des Stahlkörpers (94) bedeckt, wobei die Hülse (120) einen Innendurchmesser aufweist, der nur geringfügig größer ist als der Außendurchmesser der äußeren Oberfläche (60) des Körpers (94), wodurch das Kupfer-Hartlotmaterial entlang des Heizelementes fließt, um den Spiralkanal (70) unterhalb der Hülse (120) und unterhalb der Kopfplatte (62) zu füllen, um das Heizelement (66) vollständig in dem Spiralkanal (70) mit minimaler Tiefe zu bedecken,
des Abdichtens der Verbindungsstellen rund um die Hülse (120) und rund um die Kopfplatte (62) und des Abdichtens rund um den Kaltanschluß (78), um eine wesentliche Leckage zu verhindern, und
des Befestigens eines Füllreservoirs (126) in Verbindung mit dem Spiralkanal (70) und des Einsetzens einer vorbestimmten Menge Kupfer in das Füllreservoir (26), wobei die abschließende Endbearbeitung der integralen Düse (10) die Beseitigung des Füllreservoirs (126) mit umfaßt.

2. Verfahren nach Anspruch 1, bei dem der Kopf (96) des Körpers (94) vergrößert ist, und eine kegelförmige äußere Oberfläche (98) aufweist und bei dem die Mittelöffnung (108), die sich durch die Kopfplatte (92) erstreckt, eine entsprechend passende, kegelförmige Innenoberfläche (110) aufweist, um darauf aufgenommen zu werden.

3. Verfahren nach Anspruch 1 oder 2, bei dem ein Stahlkragen (116) auf einem Ende der Hülse (120) befestigt ist, wodurch dann, wenn die Hülse (120) und die Kopfplatte (62) in Position angeordnet sind, der Kragen (116) gegen die Unterseite des Kopfes (96) anliegt und die Kopfplatte (62) in einer Position ist, die die Verbindungsstelle zwischen der kegelförmigen äußeren Oberfläche (98) des Kopfes (96) und der entsprechend passenden, kegelförmigen Innenoberfläche (110) der Kopfplatte (62) abdeckt.

4. Verfahren nach zumindest einem der vorhergehenden Ansprüche 1 bis 3, bei dem eine Kaltanschlußhülse (114) an der Kopfplatte (62) befestigt ist und rund um den vorspringenden Kaltanschluß (78) des Heizelementes (66) abgedichtet ist.

5. Verfahren nach zumindest einem der vorhergehenden Ansprüche 1 bis 4, bei dem die abschließende Endbearbeitung der integralen Düse (10) das spanende Entfernen der Stahlhülse (120) einschließt, um den Außendurchmesser der Düse (10) zu vermindern.

6. Verfahren nach zumindest einem der vorhergehenden Ansprüche 1 bis 5, bei dem ein Einfüllkanal (102) in den Körper (95) zwischen dem hinteren Ende (64) und dem Spiralkanal (70) gebohrt ist und das Füllreservoir (126) auf dem hinteren Ende (64) über dem Einfüllkanal (102) angeordnet ist, wodurch dann, wenn das Kupfer über seinen Schmelzpunkt in dem Vakuumofen erhitzt ist, dieses nach unten durch den Einfüllkanal (102) läuft, um den Spiralkanal (70) rund um das Heizelement (66) auszufüllen.

7. Verfahren nach zumindest einem der vorhergehenden Ansprüche 2 bis 6, bei dem das dichten der montierten Teile der Düse vor dem Schritt des Vakuum-Hartverlötens durch Laserschweißen ausgeführt wird.

8. Verfahren nach zumindest einem der vorhergehenden Ansprüche 2 bis 6, bei dem das Abdichten der montierten Teile der Düse vor dem Vakuum-Hartverlöten durch Hartverlöten ausgeführt wird.

9. Verfahren nach zumindest einem der vorhergehenden Ansprüche 1 bis 8, wobei außerdem Schraubenbohrungen (22) in die Kopfplatte (62) gebohrt werden, um die Düse (10) in Position in einem Spritzgießsystem zu montieren.

10. Verfahren nach zumindest einem der vorhergehenden Ansprüche 1 bis 9, mit den Schritten des Bohrens einer Bohrung (132) in die äußere Oberfläche (60) des Körpers (94) in Verbindung mit dem Spiralkanal (70), wodurch dann, wenn das Kupfer eingegossen wird, die Bohrung (132) mit Kupfer gefüllt wird, und des Bohrens einer Bohrung (134) in das erstarrte Kupfer, um ein Thermoelement (92) in diesem aufzunehmen, um die Temperatur benachbart zu dem Heizelement (66) zu messen.

11. Verfahren nach zumindest einem der vorhergehenden Ansprüche 1 bis 3, bei dem eine mittlere Mundstücksöffnung (34) in das vordere Ende (36) des Körpers (94) gebohrt wird, um in diesem entfernbar einen Stahleinsatz (40) aufzunehmen, der eine vorgegebene Konfiguration besitzt.

12. Verfahren nach Anspruch 11, bei dem der Stahlspitzeneinsatz (40) eine Torpedoanordnung (48) mit einem Torpedo (50) aufweist, das mittig in einer Mittelbohrung (42) in Ausrichtung mit der Mittelbohrung (32), die sich durch den Körper (94) erstreckt, montiert ist, wobei der Spitzeneinsatz (40) einen Nasenabschnitt (44) aufweist, der sich zum Eingriff mit dem Kern (14) einer Form während des Gebrauches erstreckt, um das vordere Ende (36) der Düse (10) zu positionieren.

## Revendications

1. Procédé de fabrication d'une buse d'injection chauffée solidaire (10) comprenant les étapes de façonnage d'un corps allongé en acier (94) comportant un trou de fusion central (32) et un conduit en spirale (70) pour
adapter un élément chauffant (66) à l'intérieur, ledit conduit en spirale (70) s'étendant le long d'une surface cylindrique extérieure (60) du corps en acier (94), enrouler un élément chauffant isolé électriquement dans le conduit (70) avec une extrémité fixée à l'intérieur adjacente à l'extrémité avant du corps en acier (94) et une borne froide de l'élément chauffant (66) à l'extrémité opposée s'étendant à partir du conduit en spirale (70) adjacente à l'éxtrémité arrière du corps en acier (94),
appliquer un matériau de brasage en cuivre et couler sous vide l'assemblage pour recouvrir complètement l'élément chauffant (66) dans le conduit en spirale (70) et pour former une liaison solidaire entre l'élément chauffant (66) et le corps en acier (94), usiner finalement la buse solidaire pour fournir la forme souhaitée et la finition de celle-ci,
caractérisé par,
les étapes supplémentaires de placer une plaque de tête en acier (62) sur la tête (96) du corps (94), la plaque de tête (62) présentant une ouverture centrale (108) à travers elle qui reçoit la tête (96) du corps en acier (94) dans une position pour couvrir la partie du conduit en spirale (70) s'étendant autour de la tête (96), la plaque de tête (62) comportant un trou (112) s'étendant radialement à travers elle depuis l'ouverture centrale (108) pour recevoir l'extrémité de l'élément chauffant (66) comportant la borne froide (78), de façon que la plaque de tête (62) puisse être légèrement tournée sur la tête (96) du corps (94) pour fournir une longueur prédéterminée de l'élément chauffant (66) s'avançant à partir d'elle pour compenser de légères variations dans l'enroulement de l'élément chauffant (66) dans le conduit en spirale (70),
insérer une extrémité avant (36) du corps en acier (94) dans un manchon d'acier (120) vers une position dans laquelle le manchon (120) couvre le conduit en spirale (70) entre la tête (96) et l'extrémité avant (36) du corps en acier (94), le manchon (120) ayant un diamètre intérieur seulement légèrement plus grand que le diamètre extérieur de la surface extérieure (60) du corps (94), de façon que le matériau de brasage en cuivre coule le long de l'élément chauffant pour remplir le conduit en spirale (70) sous le manchon (120) et la plaque de tête (62) pour recouvrir complètement l'élément chauffant (66) dans le conduit en spirale (70) à une profondeur minimale,
fermer de façon étanche les joints autour du manchon (120) et de la plaque de tête (62) et fermer de façon étanche autour de la borne froide (78) pour empêcher une fuite importante, et
fixer un réservoir remplisseur (126) en communication avec le conduit en spirale (70) et insérer une quantité prédéterminée de cuivre dans le réservoir remplisseur (126) sont réalisées, dans lesquelles l'usinage final de la buse solidaire (10) inclut l'enlèvement du réservoir remplisseur (126).

2. Procédé selon la revendication 1, dans lequel la tête (96) du corps (94) est agrandie et comporte une surface extérieure conique (98), et l'ouverture centrale (108) à travers la plaque de tête (62) présente une surface intérieure conique d'ajustement (110) pour être reçue sur elle.

3. Procédé selon les revendications 1 ou 2, dans lequel un collier en acier (116) est fixé à une extrémité du manchon (120) de façon que lorsque le manchon (120) et la plaque de tête (62) sont mis en place, le collier (116) se mette en butée contre le dessous de la tête (96) et de la plaque de tête (62) dans une position couvrant le joint entre la surface extérieure conique (98) de la tête (96) et la surface intérieure conique d'ajustement(110) de la plaque de tête (62).

4. Procédé selon au moins l'une des revendications précédentes 1 à 3, dans lequel un manchon de borne froide (114) est fixé à la plaque de tête (62) et scellé autour de la borne froide en saillie (78) de l'élément chauffant (66).

5. Procédé selon l'une au moins des revendications précédentes 1 à 4, dans lequel l'usinage final de la buse solidaire (10) inclut de retirer par usinage le manchon d'acier (120) pour réduire le diamètre extérieur de la buse (10).

6. Procédé selon l'une au moins des revendications précédentes 1 à 5, dans lequel un conduit remplisseur (102) est percé dans le corps (95) entre l'extrémité arrière (64) et le conduit en spirale (70) et dans lequel le réservoir remplisseur (126) est placé à l'extrémité arrière (64) sur le conduit remplisseur (102) de façon que lorsque le cuivre est chauffé au-dessus de son point de fusion dans le four sous vide il descende en s'écoulant par le conduit remplisseur (102) pour remplir le conduit en spirale (70) autour de l'élément de chauffage (66).

7. Procédé selon l'une au moins des revendications précédente 2 à 6, dans lequel la fermeture étanche des composants assemblés de la buse avant l'étape de brasage sous vide est réalisée par soudage au laser.

8. Procédé selon l' une au moins des revendications précédentes 2 à 6 , dans lequel l'étanchéité des composants assemblés de la buse avant l'étape de brasage sous vide est réalisée par brasage.

9. Procédé selon l' une au moins des revendications précédentes 1 à 8 consistant en outre à percer des trous de boulons (22) dans la plaque de tête (62) pour monter la buse (10) en position dans un système de moulage par injection.

10. Procédé selon l'une au moins des revendications précédentes 1 à 9, comprenant les étapes de percer une cavité (132) dans la surface extérieure (60) du corps (94) en communication avec le conduit en spirale (70) de façon que lorsque le cuivre est coulé, la cavité (132) se remplisse de cuivre, et de percer un trou (134) dans le cuivre solidifié pour recevoir un thermocouple (92) pour mesurer la température près de l'élément de chauffage (66).

11. Procédé selon l'une au moins des revendications précédentes 1 à 3, dans lequel une ouverture centrale (34) est percée dans l'extrémité avant (36) du corps (94) pour recevoir de façon amovible un insert d'acier (40) présentant une configuration prédéterminée.

12. Procédé selon la revendication 11, dans lequel l'insert d'embout en acier (40) comprend un dispositif torpille (48) avec une torpille (50) montée au centre dans un trou central (42) en alignement avec le trou central (32) à travers le corps (94), l'insert d'embout (40) ayant une partie embout (44) qui s'étend pour engager le noyau (14) d'un moule durant l'utilisation pour situer l'extrémité avant (36) de la buse (10).
